# EUROPEAN PATENT APPLICATION

(11) **EP 4 043 201 A1**
(43) Date of publication of application: **17.08.2022**
(21) Application number: 22155381.1
(22) Date of filing: 07.02.2022
(51) Int. Cl.: B32B 5/02, B32B 5/06, B32B 5/26, B32B 7/09, D04H 1/4209, E04B 1/62

(54) **MINERAL WOOL INSULATING MAT**

(30) Priority: 10.02.2021 GB 202101794
(71) Applicant: Knauf Insulation srl, 4600 Visé (BE)
(72) Inventor: Prünte, Aloys, 84359 Simbach am Inn (DE)
(74) Representative: ARC-IP

(57) **Abstract**

A mineral wool insulating element comprises a flexible mineral wool blanket comprising mineral fibres and a first non-metallic mesh arranged at a first major surface of the mineral wool blanket. The mineral wool blanket is held together by a plurality of blanket threads which pass through the mineral wool blanket and which secure the non-metallic mesh to the mineral wool blanket. The non-metallic mesh comprises a plurality of continuous mesh forming threads and a plurality of continuous stitching threads which together form a plurality of polygonal mesh openings; each vertex of each polygonal mesh opening is formed by a crossing point formed between at least one of the continuous mesh forming threads and at least one of the continuous stitching threads.

## Description

This invention relates to a mineral wool insulating element, notably to a stitched mineral wool mat, and to structures comprising a mineral wool insulating element. As used herein the term stitched mineral wool mat means a mineral wool mat held together by stitching threads that pass through the mineral wool mat.

A known type of stitched mineral wool mat comprises a rock mineral wool blanket provided with a galvanized steel mesh, typically chicken wire, covering one major surface and having galvanized steel wire stitched through the mat so that the mineral wool blanket is sandwiched and held between the mesh at one major surface and the stitching at its other major surface. Such products are often referred to as "wired mat" and are particularly useful for insulating high temperature industrial pipes: the wired mat is generally provided in a roll to facilitate transport, a length of wired mat corresponding to the circumference a pipe to be insulated is cut from the roll of wired mat and arranged around the exterior surface of a pipe with its galvanized steel mesh at the outside and with the two ends of the wired mat abutting each other so that the wired mat forms a continuous layer around the exterior circumference of the pipe, and wire clips which engage the galvanised steel mesh are arranged across the join between the two abutting ends of the length of wired mat to maintain the wired mat in place around the pipe. Use of such wired mat is not limited to any particular pipe diameter or shape, the flexibility of the wired mat allows it to be easily arranged around a pipe or other structure, and the use of the galvanised steel mesh and steel wire stitching to hold the mineral wool mat of the wired mat together allows sufficient integrity for handling with no or low levels (generally < 1% wt) of organic binder (which is useful for insulating high temperature structures).

Proposals have been made to provide a mineral wool insulating mat similar to wired mat but in which a non-metallic mesh is used in place of the galvanised steel mesh. For example, WO2018/002280 discloses a mineral wool insulating element which comprises: a mineral wool blanket comprising mineral fibres; a first non-metallic mesh arranged at a first major surface of the mineral wool blanket; a second preferably non-metallic mesh arranged at a second major surface of the mineral wool blanket; and a plurality of fasteners arranged to connect the first and second non-metallic meshes together so as to retain the mineral wool blanket sandwiched between the first and the second meshes. Disclosures of other proposed insulating products, which are not necessarily suitable as alternatives to wired mat, include:
CN202627242U which discloses a rigid composite board having a hard rock wool portion provided between layers of basalt fiber girding cloth sewn together using basalt fiber wire; an edge of the board is provided with bevel tongue portion or groove portion that is inclined at an angle of 45°;
CN104532973 which discloses a rock wool plate having a rock wool cover whose opposite surfaces are provided with a network-shaped alkali-resistant glass mesh cloth assembled with a fire-proof basalt fiber sewing thread; and
CN202324229U which discloses an insulating plate having a fabric layer at each of its major surfaces connected together via multiple wires which penetrates into the heat preserving plate, where the heat preservation plate is rock wool, glass wool, perlite or phenolic plate, the fabric layer is glass fiber lattice cloth, nylon fiber fabric layer or metal layer, and the wire is cotton, nylon line or glass fiber wire.

In accordance with one of its aspects, the present invention provides a mineral wool insulating element as defined in claim 1; other aspects are defined in other independent claims. The dependent claims define preferred and/or alternative embodiments.

One aspect of the present invention is based upon the realisation that an improved mineral wool insulating element can be devised by providing a particular form of non-metallic mesh at one of the major surfaces; this facilitates use of the improved mineral wool insulating element in circumstances in which wired mat has previously been used as the standard insulating material. The non-metallic mesh reduces the risk of injuries associated with handling wired mats, avoids or reduces thermal bridges and contributes to reducing the weight on the insulating element.

The particular form of non-metallic mesh which is used in the mineral wool insulating elements disclosed herein is configured so that, when secured to the mineral wool blanket by the blanket threads, the non-metallic mesh is stable in both the length direction and the width direction of the mineral wool insulation element, i.e. the mesh resists tensile forces applied to threads of the mesh in both the length direction and the width direction of the mineral wool insulation element without the mesh being pulled apart or breaking in a way which would prevent it functioning, at least when the tensile force are of a magnitude equivalent to handling of the mineral wool insulating element (e.g. picking up the mineral wool insulating element by the thread of the mesh) and securing the mineral wool insulating element in place when in use by engaging clips or hooks with threads of the mesh. There may, nevertheless, be some displacement of individual threads of the mesh when such forces are applied; indeed, such displacement can be desirable to allow for distribution of tensile forces over the mesh. Without wishing to be bound by theory, it is believed that an advantageous way in which this is achieved in the meshes disclosed herein is by arranging a crossing point, which may be provided by a knot or stitching at each vertex of each of the polygonal mesh openings. Each crossing point is preferably provided by wrapping at least one of the continuous stitching threads around at least one of the continuous mesh forming threads. Furthermore, when the mesh is cut, for example by cutting through the threads of adjacent mesh opening when a length of mineral wool insulating element is being cut from a roll, the mesh openings off-set from the cut edge of the mesh by one uncut mesh opening should be stable. Again, it is believed that arranging the aforementioned crossing points at each vertex of each of the mesh openings contributes to achieving this.

Particularly preferred meshes are inherently dimensionally stable. As used herein, the term "inherently dimensionally stable" means that the mesh inherently maintains the shape and dimensions of its mesh openings and of the overall mesh stricture without stretching or application of tensile forces. For example, one particular preferred mesh is a warp knitted mesh which, directly upon removal from the warp knitting machine upon which it has been warp knitted and without stretching or application of tensile forces, has the shape and dimensions of its mesh openings and of the overall mesh structure in the form in which the mesh will be used when secured to the mineral wool insulating element. This facilitates winding on and unwinding from a mandril for transportation of the mesh and handling and feeding of the mesh through machinery serving to assemble the mesh with the mineral wool by insertion of the blanket threads. The mesh is preferably a non-rigid mesh. As used herein the term "non-rigid mesh" means that the mesh deforms under its own weight when not supported. More preferably, the mesh has a degree of flexibility such that when the mesh is arranged on a horizontal planar surface with a portion of the mesh positioned on the planar surface and a portion of the mesh protruding beyond an edge of the surface, the portion of the mesh which protrudes beyond the edge of the surface falls at an angle of 90° with respect to the horizontal planar surface.

The mineral wool insulating element and the mineral wool blanket should be flexible i.e. non-rigid. As used herein the term "flexible" in relation to the mineral wool insulating element and the mineral wool blanket means the ability to be manually wrapped or rolled around and/or to conform to the contours of a supporting substrate. The degree to which the mineral wool insulating element and the mineral wool blanket are flexible will depend upon their thickness; a thinner mineral wool insulating element will be easier to wrap around a small diameter pipe that a thicker mineral wool insulating element. The flexibility of the mineral wool blanket can also be increased by reducing its density. The mineral wool insulating element and the mineral wool blanket disclosed herein preferably have the following flexibility:

| Thickness of mineral wool insulating element and/or the mineral wool blanket | Outside diameter of pipe around which the mineral wool insulating element and the mineral wool blanket can be manually wrapped |
|---|---|
| 50 mm | 7 mm |
| 80 mm | 100 mm |
| 100 mm | 140 mm |

As used herein the term "manually wrapped around a pipe" means that the mineral wool element and the mineral wool blanket are manually wrapped around the outside diameter of the pipe so as to conform to the shape of the pipe without requiring the use of tools to deform the mineral wool insulating element and/or the mineral wool blanket. The mineral wool insulating element is preferably provided in the form of a roll, its flexible nature allowing it to be formed into a roll. Each major surface of the mineral wool blanket is preferably planar i.e. devoid of intentionally formed notches, gaps or cut-outs.

The mesh forming threads and the stitching threads preferably comprise, and more preferable consist of, fibres formed from filaments selected from basalt filaments, glass filaments and a combination of basalt filaments and glass filaments. This facilitates provision of a flexible, fire resistant mesh having good tensile strength. Particularly in this case:
- a preferred form of mesh forming threads is a roving having a linear density of 300 tex; and
- a preferred form of stitching thread is a twisted yarn having a linear density of 270 tex. The mesh forming threads are preferably rovings although twisted yarns may be used. The mesh forming threads preferably have a linear density in the range 50 to 1000 tex, more preferably 100 to 600 tex. The stitching threads are preferably twisted yarns; they preferably have a linear density in the range 50 to 1000 tex, more preferably 200 to 500 tex. Each of the mesh forming threads and/or stitching threads preferably comprises a plurality of continuous filaments and may comprise, for example between 500 and 10000 filaments, notably between 1000 and 3000 filaments.

The non-metallic mesh may have an ultimate tensile strength (i.e. at breakage), uniaxial or biaxial, which is ≤ 20 kN/m, ≤ 15 kN/m, ≤ 10 kN/m or ≤ 8 kN/m notably as measured according to ISO 10319:2015. The non-metallic mesh preferably has sufficient tensile resistance to withstand the force of two edges or two points of the mesh being pulled apart with a force which is ≥ 100 N, ≥ 200 N or ≥ 300 N, for example during attachment of a fastener to connect the two edges or points of the mesh when the insulating element is wrapped around a pipe or secured by the mesh to a supporting structure.

The non-metallic mesh, particularly a surface of the non-metallic mesh, may be coated, for example with an organic coating or an inorganic coating. The coating may be a fire-resistant coating; it may improve fire resistance of the mesh and/or the insulating element. Particularly in the case of a mesh comprising mineral fibres, for example basalt fibres, the coating may facilitate cutting of the mesh, for example using scissors and/or may prevent relative movement between individual fibres of the mesh. For example, the non-metallic mesh may comprise coated basalt fibres, notably basalt fibres coated with a non-combustible coating.

The polygonal mesh openings may be hexagonal or quadrilateral. Quadrilateral mesh openings are preferred as this facilitates manufacture and preferably comprise substantially square or substantially rhombic openings; each side of each polygonal mesh opening, particularly when this is a square or rhombic mesh opening is preferably ≥ 15mm and ≤ 60 mm, more preferably ≥ 25 mm and ≤ 40 mm. This provides a mesh which, when secured to the mineral wool blanket can be easily handled by a user engaging the fingers of one hand with the mesh and which facilitates placement and retention of clips or other fasteners used to retain the mineral wool insulating element at or around a structure to be insulated, for example, around a pipe. Substantially square mesh openings are particularly preferred, notably as this facilitates handling.

Preferably, no mesh, other than that provided by the blanket threads, is provided at the second major surface of the mineral wool blanket. This facilitates rolling of the insulating element and installation of the mineral wool insulating element at a structure to be insulated, for example around a pipe.

The non-metallic mesh may have a weight ≥ 50 g/m² and/or ≤ 500 g/m², more preferably ≥ 80 g/m² and/or ≤ 200 g/m², for example about 100 g/m².

The blanket threads may comprise metal threads, for example wire, notably steel wire for example galvanized steel wire or stainless steel wire; metal threads tend to be self-retaining within the mineral wool blanket, that is to say that when bent into a desired shape during insertion into the mineral wool blanket, the plastic deformation of bends in the metal threads helps to retain them within the mineral wool blanket so that pulling on one end of the metal thread does not easily dislodge it from the mineral wool blanket. Thus, metal blanket threads are preferred in some embodiments. Where metal blanket threads are used, these preferably have a diameter which is ≥ 0.4 mm and ≤ 1.0 mm, more preferably ≥ 0.5 mm and ≤ 0.7 mm with a diameter of 0.6 mm being particularly preferred; this facilitates stitching and retention of the blanket threads and holding together of the mineral wool blanket by the blanket threads and still allows cutting of the mineral wool insulating element with shears or scissors. Surprisingly, even when such metal blanket threads are used, the mineral wool insulating elements comprises a sufficiently small amount of metal to enable them to be introduced into a mineral wool melting furnace, for example a cupola furnace once chopped and briquetted, without removal of the metal blanket threads. This facilitates recycling. In an alternative preferred embodiment, the blanket threads comprise or consist of non-metallic threads; this facilitate cutting and/or recycling and/or corrosion resistance. The non-metallic blanket threads preferably comprise or consist of a plurality of basalt filaments and/or glass filaments, notably in the form of a twisted yarn.

The blanket threads are preferable sewn or stitched through the mineral wool blanket. The blanket threads preferably follow a path as follows: starting from the non-metallic mesh at the first major surface of the mineral wool blanket, the thread enters the mineral blanket, passes through the mineral blanket, emerges at the second major surface of the blanket, continues along that second major surface, returns back into the mineral wool blanket, passes again through the mineral blanket and emerges at the first major surface of the blanket, passes through the non-metallic mesh and continues along the exposed surface of the mesh, returns back into the mineral wool blanket, passes again through the mineral blanket and emerges at the second major surface of the blanket. This path may be repeated a plurality of times to provide a stitching. The blanket threads may be slack in order to give some flexibility to the mineral wool insulating element. Such flexibility helps maintain the integrity of the mineral wool insulating element when it is subjected to several folding and unfolding steps. This is especially the case when the insulating elements are rolled for transportation, unrolled on site for installation and wrapped around a structure, for example a pipe or tank, to be insulated. It is preferred for a plurality of parallel, individual blanket threads to be provided with:
- the distance between adjacent blanket threads preferably being ≥ 5 cm and ≤ 15cm, more preferably ≥ 5 cm and ≤ 15cm, with a distance of 10cm being particularly preferred; and/or
- a distance of ≥ 1 cm and ≤ 5cm, more preferably ≥ 2 cm and ≤ 4 cm between the edge of the mineral wool insulating element and the blanket thread closest to that edge.

This contributes to holding the mineral wool blanket securely without requiring the use of an excessive number of blanket threads.

Each blanket thread preferably follows a regular waveform through the mineral wool blanket, notably a square waveform. The wavelength of each blanket thread is preferably ≥ 8 cm and ≤ 20 cm, more preferably ≥ 10 cm and ≤ 16 cm. This contributes to holding the mineral wool blanket securely.

The mineral wool blanket of the mineral wool insulating element comprise fibres selected from rock fibres, glass fibres and mixtures of rock and glass fibres. The fibres may have an average diameter between 2 µm and 9 µm. The majority of the fibres of the mineral wool blanket may be orientated substantially parallel to its major surfaces. Alternatively, the majority of the fibres of the mineral wool blanket may be orientated substantially perpendicular to its major surfaces.

Particularly for applications with higher service temperatures (>300 °C), notably between 450°C and 750°C, a mineral wool blanket comprising at least 90% by weight rock mineral fibres is preferred, notably for its temperature resistance. The rock mineral fibres may: comprise between 30 and 55 wt-% SiO₂ and/or between 10 and 30 wt-% Al₂O₃; and/or an alkali/alkaline-earth ratio of their composition which is < 1; and/or a combined quantity of CaO and MgO ranging from 20 to 30 wt-%; and/or a combined quantity of Na₂O and K₂O < 8 wt%.

The mineral wool blanket preferably comprises a small quantity of an organic binder and/or organic de-dusting oil, the quantity the organic binder, and preferably the quantity of the combination of organic binder and organic de-dusting oil, preferably being ≤ 2.0 wt%, ≤ 1.5 wt% or ≤ 1.0 wt% and ≥ 0.2 or ≥ 0.1. This facilitates handling of the mineral wool blanket during manufacture of the mineral wool insulating element and limits the release of dust upon cutting of the mineral wool blanket without resulting in significant emissions from decomposition of organics during use of the mineral wool insulating element, for example at a service temperature of ≥ 300 °C. It is particularly preferred for the quantity of the combination of organic binder and organic de-dusting oil in the mineral wool blanket to be ≤ 1.0 wt% and ≥ 0.1 wt%; this provided a combination of advantageous handling of the mineral wool blanket and non-combustibility. The binder is preferably a no added formaldehyde binder (i.e. a binder whose reactants are formaldehyde free); this is environmentally advantageous.

The mineral wool blanket may have a density which is ≥ 50 kg/m³, ≥ 60 kg/m³ or ≥ 70 kg/m³ and/or ≤ 110 kg/m³, ≤ 100 kg/m³ ≤ 90 kg/m³. A particularly preferred density for the mineral wool blanket is a density which is ≥ 70 kg/m³ and ≤ 90 kg/m³; this provides a useful combination of desirable thermal insulation properties and ease of handling. The mineral wool blanket preferably has a homogeneous density throughout its thickness.

The mineral wool insulating element may have dimensions before installation and/or when installed which include:
- a thickness which is ≥ 2 cm and/or ≤ 40 cm; or
- a thickness which is ≥ 3 cm or ≥ 5 cm or ≥ 7 cm and/or ≤ 30 cm, or ≤ 20 cm ≤ 15 cm or ≤ 10 cm or ≤ 8 cm; and/or
- a length which is ≥ 0.5 m, ≥ 1 m or ≥ 2 m and/or ≤ 9 m, or ≤ 6 m or ≤ 4 m; and/or
- a width which is ≥ 0.2 m, ≥ 0.4 m or ≥ 0.5 m and/or ≤ 2.8 m, ≤ 2 m, ≤ 1.5 m or ≤ 1.2 m. Preferred dimensions of the mineral wool element before installation are: a thickness between 3cm and 12cm, a length between 2m and 10m and a width between 50cm and 90 cm.

The thickness of the mineral wool insulating mat is determined in accordance with the relevant EN product standard, notably associated with the relevant EN measurement standard, for example in accordance with EN13162 or EN14303, as applicable on 30 June 2016.

The mineral wool insulating element may have a fire rating of at least a class B and preferably class A2 or A1 according to EN 13501-1 and test method EN 13820. It may be rated for use at continuous operating temperatures up to a maximum service temperature (MST) which is ≥ 100 °C, ≥ 150 °C, ≥ 200 °C, ≥ 300 °C, ≥ 400 °C, ≥ 500 °C or ≥ 600 °C and/or ≤ 1000 °C or ≤ 800 °C. The MST is determined according to EN 14706.

The mineral wool insulating element may have a thermal conductivity (λ) in mW/(mK) according to EN12667 of:
≤ 45 or ≤ 42 at 50°C; and/or
≤ 50 or ≤ 49 at 100°C; and/or
≤ 70 or ≤ 69 at 200°C; and/or
≤ 100 or ≤ 98 at 300°C; and/or
≤ 118 or ≤ 115 at 400°C; and/or
≤ 153 or ≤ 150 at 500°C; and/or
≤ 201 or ≤ 198 at 600°C.

The mineral wool insulating element is particularly suitable for providing thermal and/or acoustic and/or fire insulation, for example for: technical insulation; marine insulation; insulation of heating, ventilating and air conditioning (HVAC) ducts; and industrial insulation, for example insulation of pipes (notably metal pipes), pipe elbows, boilers and tanks. As it is non-rigid or flexible, the mineral wool insulating element is particularly suitable for wrapping around: large diameter high temperature pipework; vessels or tanks, for example having convex surfaces to be insulated. The mineral wool insulating element may be used to significantly reduce noise generated by liquid and granular materials transported through pipework at high velocity.

In addition to helping to retain the integrity of the mineral wool blanket and provide anchoring points for fasteners used to secure the mineral wool insulating element in place, the non-metallic mesh provide an absence of sharp projections (the metal meshes of wired mats must be carefully handled to avoid scratches, notably from loose metallic threads ends). The use of non-metallic threads which are made up from fine non-metallic filaments facilitates this. The non-metallic mesh, particularly when used with non-metallic blanket threads, are also particular suitable for providing dielectric insulating mats and/or avoiding the risk of electrical conduction through the mineral wool blanket. Furthermore, the non-metallic mesh and the blanket threads, particularly when the blanket threads are also non-metallic, may be introduced in a mineral wool melting furnace for recycling the mineral wool along with the mineral wool of the mineral wool blanket; this greatly facilitates recycling. The use of the non-metallic mesh contributes to minimising thermal bridges through the mineral wool blanket and provides a surface which is corrosion resistant, for example rust resistant. The use of non-metallic blanket threads provides additional corrosion resistance; this may facilitate use in circumstance where the mineral wool insulating element is exposed to corrosive surroundings, for example saltwater spray or mist. The mesh, notably in combination with the blanket threads, preferably contribute to providing resilience to the mineral wool insulating element, for example contributing to recovery of the shape and/or dimensions following compression, for example following compression for packaging. In some cases, the mineral wool insulating element may be configured to be folded or wrapped around a support, for example wrapped around an arc having a radius of 10cm and a length of 8 cm, without plastic deformation or "memory effect" of the mineral wool insulating element; in this case, the mineral wool insulating element preferably resumes its original configuration, for example a substantially planar configuration, when unwrapped and can thus be easily wrapped around a pipe or other support, removed for inspection or maintenance and re-wrapped around the same or a different support. The use of the non-metallic meshes with metal or non-metallic blanket threads also facilitate cutting of the mineral wool element; this is a significant advantage, notably on site, when workers have to resize the insulating element to fit closely to the geometry of the desired installation. It is surprising that even which metallic blanket threads are used, cutting of the mineral wool insulating element, for example using scissors or shears, is still easy, notably because only a small number of metal blanket threads need to be cut when a cut is made across the width of the mineral wool insulating element.

In accordance with a further aspect, the present invention provides a structure comprising a mineral wool insulating element as described herein folded or wrapped around a support. The substantially flexible or non-rigid nature of the mineral wool insulating element allows it to be wrapped or rolled around and/or to conform to the contours of the support. The support may comprise: a support structure; a building support, for example a beam notably a metal beam, for example an I section beam; a pipe, pipe elbow, boiler or tank, notably of metal; a marine structure, for example part of the structure, hull, deck, bulkhead, floor, airducts, pipes or fittings of a marine vessel; a heating, ventilating or air conditioning duct. Particularly in the case of a marine structure, the mineral wool insulation may be secured to a support structure, notably a metal support structure, by pins which are secured to the support structure, for example by welding, and which pass partially or entirely through the mineral wool insulating element. Attachment by pins is particularly suitable for walls and/or ceilings of a marine or other structure. The mineral wool insulating element may be hung from such pins, for example subsequent to securing of the pins to the support structure. A head of the pin preferably engages with the non-metallic mesh of the mineral wool insulating element, a portion of a shaft of the pin passing through a mesh opening of the non-metallic mesh and an underside of the head of the pin engaging with the non-metallic threads of the mesh which define the said mesh opening. The non-metallic mesh may, in this or other ways, be arranged between the head of the pin and the support structure.

An embodiment of the invention will now be described, by way of example only, with reference to the accompanying drawing of which:
Fig. 1 is a top, plan view of a mineral wool insulating element;
Fig. 2 is a schematic side view of the mineral wool insulating element of Fig 1;
Fig. 3 is a bottom, plan view of the mineral wool insulating element of Fig 1;
Fig. 4 is a schematic perspective view of the mineral wool insulating element of Fig 1 arranged around a pipe;
Fig. 5 is schematic plan view of a non-metallic mesh;
Fig. 6 is a schematic plan view of an alternative non-metallic mesh in a configuration as made; and
Fig. 7 is a schematic plan view of the non-metallic mesh of Fig. 6 in configuration ready for use.

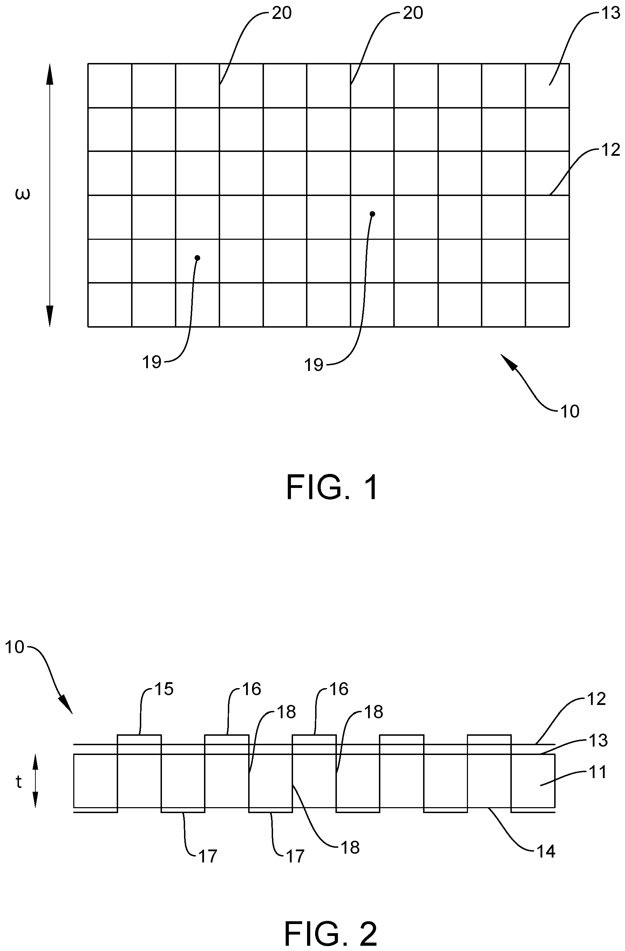

Fig 1, Fig 2 and Fig 3 illustrate a mineral wool insulating element 10 which has been cut from a roll of insulating material (not shown) and which comprises:
- a flexible mineral wool blanket 11;
- a non-metallic mesh 12 arranged at a first major surface 13 of the mineral wool blanket 11; and
- a plurality of continuous blanket threads 15 which pass through the mineral wool blanket 11 and secure the non-metallic mesh 12 to the first major surface 13 of the mineral wool blanket 11.

The non-metallic mesh 12 lies against and is in contact with the first major surface 13 of the mineral wool blanket. The blanket threads 15 have: mesh contacting portions 16 portions which lie against and in contact with an upper surface of the mesh 12; mat contacting portions 17 which lie against and in contact with the second major surface 14 of the mineral wool blanket and fastening portions 18 which pass through the mineral wool blanket 11. In this way, the blanket threads 15 hold the mineral wool blanket together and secure the non-metallic mesh 12 to the mineral wool blanket 11. Purely for illustrative purposes, Fig 2 shows the mesh 12 spaced from the first major surface 13 of the mineral wool blanket and the mesh contacting 16 and mat contacting 17 portions of the blanket threads likewise spaced from the upper surface of the mesh 12 and the second major surface 14 of the mineral wool blanket respectively.

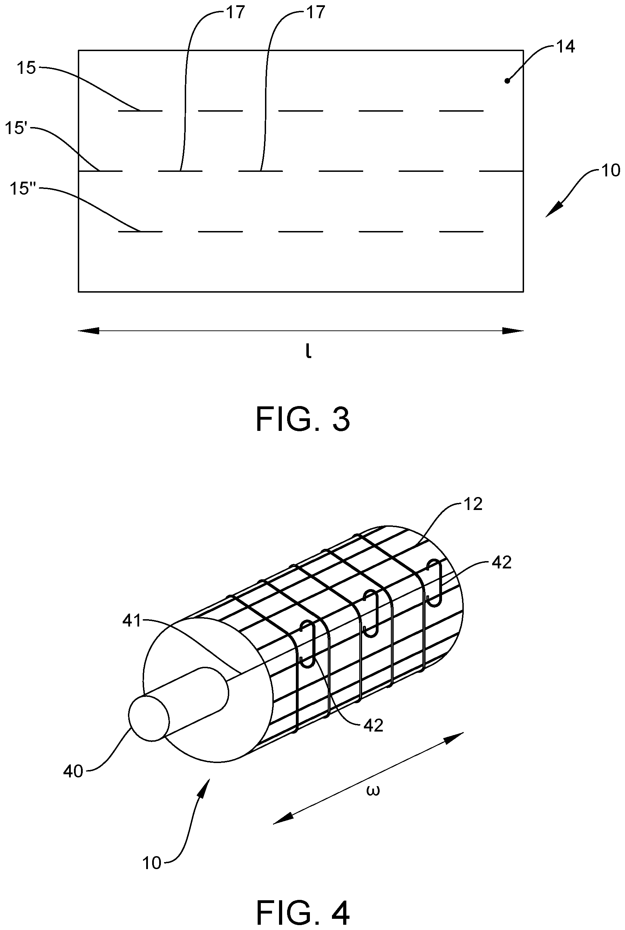

Fig 3 illustrated three blanket threads 15, 15', 15" and their respective mat contacting portions 17. Each of the blanket threads 15, 15', 15" is a continuous thread which runs along the length I of the mineral wool insulating element 10, each blanket thread 15, 15', 15" being spaced from its adjacent blanket threads in the width direction w of the insulating element 10. The positions of the mat contacting portions 17 of adjacent blanket threads 15, 15' are offset along the length I of the mineral wool insulating blanket 10; this contributes to the integrity of the mineral wool insulating element 10. For illustrative purposes Fig 3 shows three blanket threads 15, 15', 15" across the width of the mineral wool element 10. In preferred embodiments the blanket threads are spaced at regular intervals of about 10 cm across the width w of the mineral wool element with a distance of 2 to 3 cm between the edge of the mineral wool element and the blanket thread adjacent to that edge. As shown in Fig 2, each blanket thread follows a square waveform through the mineral wool blanket 11 having, in this preferred embodiment, a wavelength of 12 cm so that each mesh contacting portion 16 of the blanket thread has a length of 6 cm and each mat contacting portion 17 of the blanket thread has a length of 6 cm. Adjacent blanket threads 15, 15' are arranged to be out of phase by half a wavelength i.e. by 6 cm in this embodiment.

In the illustrated embodiment, each blanket thread 15 is provided by 0.6 mm diameter galvanised steel wire; such steel wire blanket threads can be inserted in to the mineral wool insulating element 10 using existing machinery which is used to insert steel blanket threads into wired mats. Nevertheless, in an alternative embodiment each blanket thread is provided by a non-metallic thread, notably comprising a plurality of basalt filaments and/or glass filaments, notably in the form of a twisted yarn. Surprisingly, the same machinery may be used to insert the non-metallic blanket threads in to the mineral wool insulating element 10.

Fig 1 shows the non-metallic mesh 12 which lies against and is secured to the mineral wool blanket 11. The mesh 12 has a plurality of quadrilateral mesh openings 19 which in this embodiment are square mesh openings. For illustrative purposes the size of the square mesh openings (which are preferable between 25mm x 25mm and 40mm x 40mm) is not shown to scale. The illustrated mesh 12 has a plurality of parallel stitching threads 20 which run in the width direction w of the mineral wool element 10.

Fig 4 shows the mineral wool insulating element 10 arranged around the circumference of a pipe 40 to be insulated. The length I of the mineral wool insulating element 10 has been cut to correspond to the desired external circumference of the mineral wool insulating element around the pipe 40 so that the two ends of the insulating element form an abutting join 41 at a position around the circumference and the insulating element 10 forms a continuous layer around the pipe 40. The flexible nature of the mineral wool blanket 11 facilitates deformation of the material to provide this abutment 41. Wire clips 42 which engage the non-metallic mesh 12 of the mineral wool element 10 are positioned across the join 41 between the two abutting ends of the length of the mineral wool insulating element to maintain the insulating element 10 in place around the pipe 40. Individual insulating elements 10 (of which only one is shown in Fig 4) are arranged in this way adjacent to each other along the pipe 40 to provide insulation.

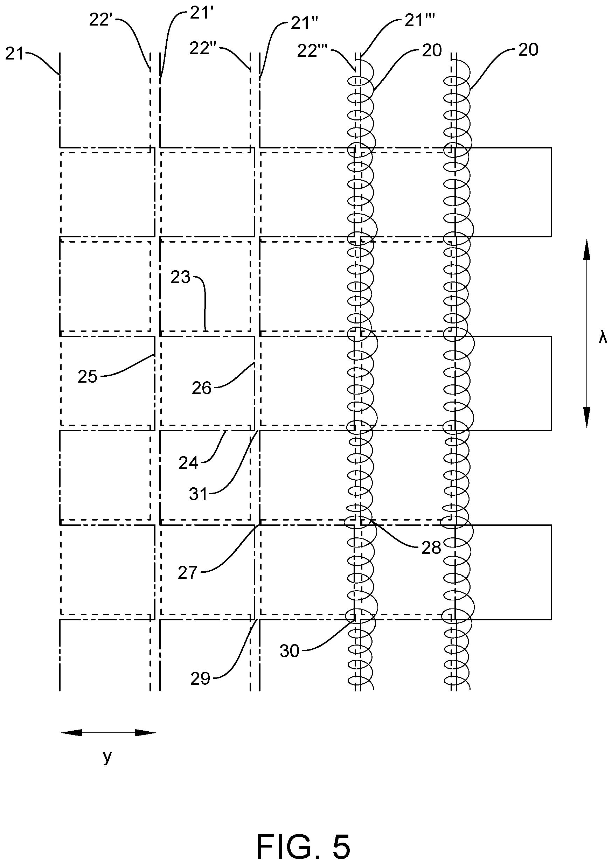

Fig 5 shows in greater detail the mesh 12 of Figs 1, 2 and 3. For illustrative purposes: i) the stitching threads 20 are only shown on the right-hand portion of Fig 5 and ii) although all of the threads forming the mesh are continuous, to facilitate differentiation between threads, some are shown in dotted lines. The mesh 12 comprises:
- mesh forming threads comprising a first series 21', 21", 21'" and a second series 22', 22", 22'" of partial weft threads, and
- a plurality of stitching threads 20.

Each partial weft thread 21', 21", 21‴, 22', 22", 22‴ follows a square waveform having its wavelength λ extending in a warp direction and its amplitude y in a weft direction. The square waveform of each partial weft thread has i) the same wavelength as the wavelengths of the other partial weft threads and ii) the same amplitude as the amplitude of the other partial weft threads.

The first series 21', 21", 21‴ of partial weft thread comprises a series of partial weft threads 21', 21", 21‴ spaced from each other in the weft direction, each partial weft thread 21', 21", 21'" in the first series having its waveform in phase with the other partial weft threads in the first series 21', 22", 21‴ and being offset in the weft direction with respect to each of its adjacent partial weft threads in the first series by a distance equal to the amplitude y of the waveform.

The second series 22', 22", 22'" of partial weft thread comprises a series of partial weft threads 22', 22", 22'" spaced from each other in the weft direction, each partial weft thread in the second series 22', 22", 22'" having its waveform in phase with the other partial weft threads in the second series 22', 22", 22'" and being offset in the weft direction with respect to each of its adjacent partial weft threads in the second series by a distance equal to the amplitude y of the waveform.

The first series 21', 21", 21‴ of partial weft threads and the second series 22', 22", 22'" of partial weft threads are out of phase with each other in the warp direction by a distance of half a wavelength λ/2.

One partial weft thread from the first series 21', 21", 21‴ of partial weft threads and one partial weft thread from the second series 22', 22", 22'" of partial weft threads is arranged at each position within the mesh 12 at which the partial weft threads run in the warp direction so that the first 21', 21", 21‴ and seconds series 22', 22", 22'" of partial weft threads together form the top 23, bottom, 24, left 25 and right 26 sides of the square mesh openings 19, each vertex (i.e. corner) 27, 28, 29, 30 of each square mesh opening 19 comprises an intersection between two partial weft threads of the first series 21', 21", 21‴ and two partial weft threads of the second series 22', 22", 22‴.

The plurality of continuous mesh forming threads 21', 21", 21‴, 22', 22", 22'" thus together define warp and weft direction sides of the square mesh openings 19.

The stitching threads comprises a plurality of parallel stitching thread 20, each of which runs in the warp direction, one of the plurality of stitching threads 20 being arranged at each position within the mesh 12 at which the partial weft threads run in the warp direction, so that each stitching thread stitches together the partial weft threads present at the corners 27, 28, 29, 30 of the square mesh openings along its path. Each vertex 27, 28, 29, 30 of each square mesh opening 19 is thus formed by a crossing point formed by wrapping of one of the stitching threads 20 around at the mesh forming threads at that vertex. For example, vertex 31 of the square mesh opening comprises a crossing point formed by wrapping a stitching thread (not shown) around four mesh threads 21', 21", 22" and 22‴.

In the mesh 12 of Fig 5:
- each of the partial weft threads and the stitching threads consists of basalt filaments (though glass filaments or a mixture of basalt and glass filaments may alternatively be used);
- each of the partial weft threads consists of a non-twisted roving; and
- each of the stitching threads consists of a twisted yarn.

At each position within the mesh 12 at which the partial weft threads run in the warp direction, a warp thread (not illustrated) may be provided as one of a plurality of optional continuous, spaced warp threads.

Additionally or alternatively, a plurality of optional weft insertion threads (not illustrated) may be provided, one at each position within the mesh 12 at which the partial weft threads run in the weft direction.

Such warp and/or weft insertion threads may be used to contribute to the tensile resistance of the mesh 12.

The mesh is preferably constructed without full weft insertion; this avoids the formation of weft loops at the edges of the mesh.

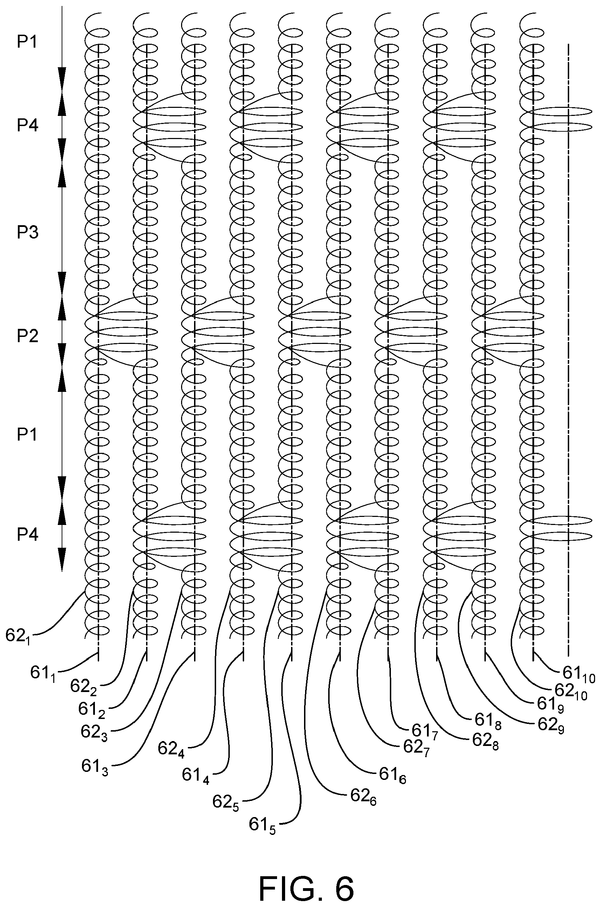

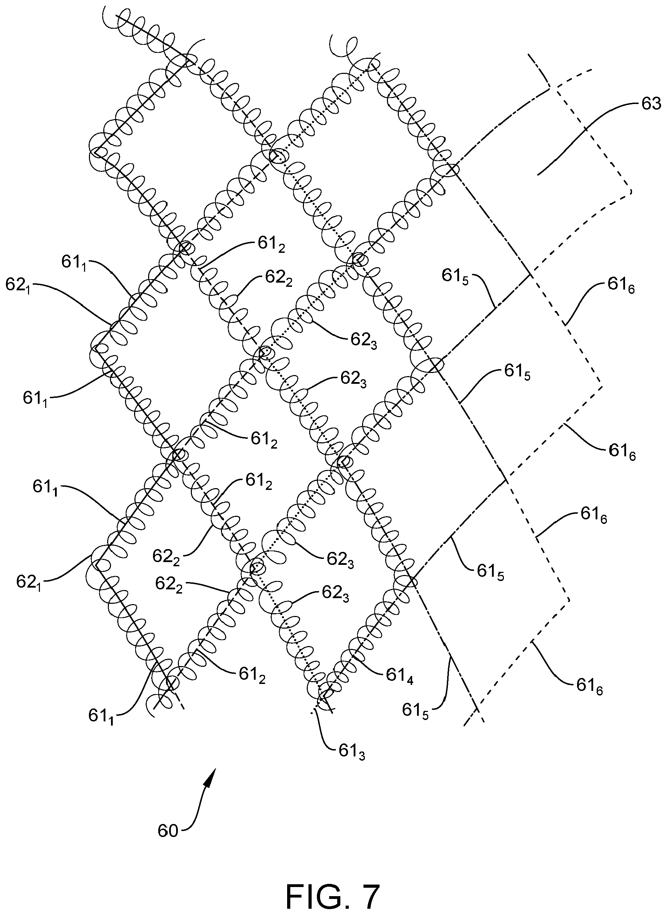

Fig 6 and Fig 7 show and alternative non-metallic mesh which, in use, provides a rhombic netlike structure 60. This mesh is constructed from a plurality of sequentially mesh forming threads comprising adjacent warp threads 61₁, 61₂, 61₃, 61₄, 61₅, 61₆, 61₇, 61₈, 61₉, 61₁₀, ... 61ₓ, each of which has an associated stitching thread 62₁, 62₂, 62₃, 62₄, 62₅, 62₆, 62₇, 62₅, 62₉, 62₁₀. ... 62ₓ and is constructed as follows:
a) At a first portion P1 along the length of the warp threads, each stitching thread 62₁, 62₂, 62₃, 62₄, 62₅, 62₆, 62₇, 62s, 62₉, 62₁₀. ... 62ₓ is wrapped around the length of its associated warp thread 61₁, 61₂, 61₃, 61₄, 61₅, 61₆, 61₇, 61₈, 61₉, 61₁₀, ... 61ₓ;
b) At a second position P2 along the length of the length of the warp threads (P2 being adjacent to P1 along the length of the warp threads):
   - the stitching threads 62₁, 62₂ associated with a first pair of adjacent warp threads 61₁, 61₂, are wrapped around both warp threads 61₁, 61₂, of the first pair of warp threads;
   - the stitching threads 62₃, 62₄ associated with a second pair of adjacent warp threads 61₃, 61₄, are wrapped around both warp threads 61₃, 61₄, of the second pair of warp threads, the second pair of warp threads being adjacent in the weft direction to the first pair of ward threads;
   - the stitching threads 62₅, 62₆ associated with a third pair of adjacent warp threads 61₅, 61₆, are wrapped around both warp threads 61₅, 61₆, of the third pair of warp threads, the third pair of warp threads being adjacent in the weft direction to the seconds pair of warp threads;
   - and so on for the adjacent pairs of warp threads in the weft direction of the mesh.
c) At a third position P3 along the length of the warp threads (P3 being adjacent to P2 along the length of the warp threads), each stitching thread 62₁, 62₂, 62₃, 62₄, 62₅, 62₆, 62₇, 62₅, 62₉, 62₁₀. ... 62ₓ is wrapped around the length of its associated warp thread 61₁, 61₂, 61₃, 61₄, 61₅, 61₆, 61₇, 61₈, 61₉, 61₁₀, ... 61ₓ ;
d) At a fourth position P4 along the length of the warp threads (P4 being adjacent to P3 along the length of the warp threads),
   - the stitching threads 62₂, 62₃ associated with adjacent warp threads 61₂, 61₃ from the first pair 62₁, 62₂ and second pair 62₃, 62₄ of warp threads are wrapped around both of said adjacent warp threads 61₂, 61₃;
   - the stitching threads 62₄, 62₅ associated with adjacent warp threads 61₄, 61₅ from the second pair 62₃, 62₄ and third pair 62₅, 62₆ of warp threads are wrapped around both of said adjacent warp threads 61₂, 61₃;
   - the stitching threads 62₆, 62₇ associated with adjacent warp threads 61₆, 61₇ from the third pair 62₅, 62₆ and fourth pair 62₇, 62₈ of warp threads are wrapped around both of said adjacent warp threads 61₆, 61₇;
   - and so on in the weft direction of the mesh;
e) the series of positions P1, P2, P3, P4 is then repeated sequentially in the length direct of the warp threads.

As illustrated in Fig 7, this construction, when stretched in the weft direction, provides a rhombic netlike structure 60 in which each rhombic mesh opening 63 has its sides defined by adjacent warp threads with the corners of each rhombic mesh opening 63 being provided by a crossing point formed by wrapping two stitching threads around two (adjacent) warp yarns .

In the mesh 60 of Fig 6 and Fig 7:
- each of the warp threads and the stitching threads consists of basalt filaments (though alternatively, glass filaments or a mixture of basalt and glass filaments may be used);
- each of the warp threads consists of a non-twisted roving; and
- each of the stitching threads consists of a twisted yarn.

### Reference numbers:

- 10: mineral wool insulating element
- 11: flexible mineral wool blanket
- 12: non-metallic mesh
- 13: first major surface of mineral wool blanket
- 14: second major surface of mineral wool blanket
- 15: blanket threads
- 16: mesh contacting portions of the blanket threads
- 17: mat contacting portions of the blanket threads
- 18: fastening portions of the blanket threads
- 19: mesh openings
- 20: stitching thread
- 21: first series of partial weft threads
- 22: second series of partial weft threads
- 23: top side of square mesh opening
- 24: bottom side of square mesh opening
- 25: left side of square mesh opening
- 26: right side of square mesh opening
- 27: corner of mesh opening
- 28: corner of mesh opening
- 29: corner of mesh opening
- 30: corner of mesh opening
- 31: vertex
- 40: pipe
- 41: abutting join
- 42: wire clips
- 60: rhombic netlike structure
- 61: warp threads
- 62: stitching thread
- 63: rhombic mesh opening
- P1: first position along length of warp threads
- P2: second position along length of warp threads
- P3: third position along length of warp threads
- P4: fourth position along length of warp threads
- I: length of mineral wool element
- w: width of mineral wool element
- t: thickness of mineral wool element
- λ: wavelength
- y: amplitude

## Claims

1. A mineral wool insulating element comprising:
- a mineral wool blanket comprising mineral fibres; and
- a non-metallic mesh arranged at a first major surface of the mineral wool blanket;
- in which the mineral wool blanket is held together by a plurality of blanket threads which pass through the mineral wool blanket and which secure the non-metallic mesh to the mineral wool blanket, the mineral wool blanket comprising ≤ 2.0 wt% of organic binder;
and in which
- the non-metallic mesh comprises i) a plurality of continuous mesh forming threads comprising non-metallic filaments and ii) a plurality of continuous stitching threads comprising non-metallic filaments; and
- the continuous mesh forming threads and the continuous stitching threads together form a plurality of polygonal mesh openings, notably quadrilateral mesh opening, and in which each vertex of each polygonal mesh opening is formed by a crossing point formed between at least one of the continuous mesh forming threads and at least one of the continuous stitching threads, notably a crossing point formed by wrapping at least one of the continuous stitching threads around at least one of the continuous mesh forming threads.

2. A mineral wool insulating element in accordance with claim 1,
in which the polygonal mesh openings are square mesh openings;
in which the plurality of continuous mesh forming threads comprises offset partial weft threads which together define warp and weft direction sides of the square mesh openings; and
in which the plurality of continuous stitching threads comprises a plurality of parallel stitching thread, each of which runs in the warp direction, one of the plurality of stitching threads being arranged at each position within the mesh at which the partial weft threads run in the warp direction, so that each stitching thread stitches together the partial weft threads present at the corners of the square mesh openings along its path.

3. A mineral wool insulating element in accordance with claim 2, in which the plurality of continuous mesh forming threads comprises a first series and a second series of partial weft threads, wherein:
- each partial weft thread follows a square waveform having its wavelength extending in a warp direction and its amplitude in a weft direction,
- the square waveform of each partial weft thread has i) the same wavelength as the wavelengths of the other partial weft threads and ii) the same amplitude as the amplitude of the other partial weft threads;
and in which
the first series of partial weft thread comprises a series of partial weft threads spaced from each other in the weft direction, each partial weft thread in the first series having its waveform in phase with the other partial weft threads in the first series and being offset in the weft direction with respect to each of its adjacent partial weft threads in the first series by a distance equal to the amplitude of the waveform; and
the second series of partial weft thread comprises a series of partial weft threads spaced from each other in the weft direction, each partial weft thread in the second series having its waveform in phase with the other partial weft threads in the second series and being offset in the weft direction with respect to each of its adjacent partial weft threads in the second series by a distance equal to the amplitude of the waveform;
in which the first series of partial weft threads and the second series of partial weft threads are out of phase with each other in the warp direction by a distance of half a wavelength;
and in which a partial weft thread from the first series of partial weft threads and a partial weft thread from the second series of partial weft threads is arranged at each position within the mesh at which the partial weft threads run in the warp direction so that the first and seconds series of partial weft threads together form the sides of the square mesh openings, the corners of each square mesh opening comprise an intersection between two partial weft threads of the first series and two partial weft threads of the second series.

4. A mineral wool insulating element according to any preceding claim, in which each of the partial weft threads is provided by a roving.

5. A mineral wool insulating element according to claim 1, in which the plurality of continuous mesh forming threads comprises a plurality of warp threads, each warp thread having an associated stitching thread which provides one of the plurality of continuous stitching threads, in which the plurality of polygonal mesh openings are rhombic mesh opening and in which the sides of each rhombic mesh opening are defined by adjacent warp threads and the vortex of each rhombic mesh opening is defined by a knot provided by adjacent stitching yarns.

6. A mineral wool insulating element according to any preceding claim, in which the stitching threads comprises twisted yarn.

7. A mineral wool insulating element according to any preceding claim, in which the mesh forming threads and the stitching threads consist of basalt filaments, glass filaments or a combination of glass filaments and basalt filaments.

8. A mineral wool insulating element according to any preceding claim, in which each mesh forming thread and each stitching thread comprises fibres having a linear density in the range 150 to 600 tex, notably about 300 tex.

9. A mineral wool insulating element according to any preceding claim, in which the dimensions or each side of the polygonal mesh opening is ≥ 15mm and ≤ 60 mm, preferably ≥ 25 mm and ≤ 40 mm.

10. A mineral wool insulating element according to any preceding claim, in which the weft direction of the mesh is aligned with a length direction of the mineral wool blanket.

11. A mineral wool insulating element according to any preceding claim having at least one of the following features:
- a density in the range 40 kg/m³ to 140 kg/m³;
- a thickness in the range 1 cm to 40 cm;
- in which the mineral fibres comprise fibres selected from rock fibres and glass fibres;
- a fire rating according to EN 13501-1 selected from B, A2 and A1.

12. A mineral wool insulating element according to any preceding claim, in which the blanket threads comprise non-metallic threads, notably threads selected from basalt fibres, glass fibres and a combination of glass fibres and basalt fibres.

13. A mineral wool insulating element according to any of claims 1 to 11, in which the blanket threads comprise metallic threads, notably steel wire.

14. An insulated structure selected from i) a pipe and a mineral wool insulating element in accordance with any of claims 1 to 13 wrapped around the pipe, and ii) a marine structure comprising a support structure, notably a marine deck, bulkhead, floor, airduct or pipe and a mineral wool insulating element in accordance with any of claims 1 to 13 assembled with the marine structure so as to conform to the contours of the marine structure.
